# EUROPEAN PATENT APPLICATION

(11) **EP 4 826 348 A1**
(43) Date of publication of application: **21.10.2026**
(21) Application number: 25171063.8
(22) Date of filing: 16.04.2025
(51) Int. Cl.: G01M 3/24, G01M 5/00, G01M 7/00, G01N 9/00, G01N 11/00, G01N 29/02, G01N 29/04, G01N 29/22

(54) **MEASUREMENT SYSTEM FOR DETERMINING A PHYSICAL PARAMETER OF A PIPE-FLUID SYSTEM**

(71) Applicant: ABB SCHWEIZ AG, 5400 Baden (CH)
(72) Inventor: SZASZ, Paul, 68723 Plankstadt (DE); MIGUNOV, Vadim, 68526 Ladenburg (DE); GEBHARDT, Joerg, 55130 Mainz (DE)
(74) Representative: Maiwald GmbH

(57) **Abstract**

The present invention relates to a measurement system (100) for determining a physical parameter of a pipe-fluid system (150), comprising:
- a clamping element (3, 3a, 3b) that is arranged around the pipe-fluid system (150) and that comprises a first clamping element (3a) and second clamping element (3b), wherein the first clamping element (3a) and the second clamping element (3b) form a measurement section (4) that corresponds to a segment (2a) of the pipe-fluid system (150);
- an excitation system (5) configured to excite the pipe-fluid system (150) and to induce a vibration of the measurement system (150);
- a vibration sensing element (6) configured to measure the induced vibration,
- wherein the clamping element (3, 3a, 3b) comprises of at least two clamping components (3c, 3d), wherein the two clamping components (3c, 3d) are joined at least at one connection point (10, 10a, 10b) by using a joining element (9).

## Description

### FIELD OF THE INVENTION

The present invention relates to a measurement system for determining a physical parameter of a pipe-fluid system.

### BACKGROUND OF THE INVENTION

It is possible to measure the change of a physical property, e.g. a density, a pressure, a viscosity, a flow parameter etc., of a fluid by measuring the change of the frequency of a selected circumferential vibration mode of a pipe-fluid system. For this, a setup with a confining element, e.g. a confining clamp, an impact excitation device and a (vibration) measurement are used.

The confining clamps in the measurement system are of important, as they have the role to define the vibration nodes, and consequently the operational frequency of the system. When having a retrofit clamp-on system, the clamps will usually be made of at least two separate halves or clamping components that joined together by a fastening element or joining element.

However, temporary thermal expansion differences which may occur in operation between the pipe of the pipe-fluid system and the confining clamps during thermal transients are a high risk for the confinement functionality. At certain temperature differences, the clamps may loosen and so stop to provide the required confinement, or they tighten beyond the yield strength of the pipe, resulting in irreversible damage of the pipe. Both cases are not desirable as they lead to loss of function: either to significant changes in the vibration spectrum resulting in measurement errors, or even in a damage of the pipe-fluid system.

To prevent this, in the prior art, usually elastic structures can be added to provide compliance to the system. However, the clamp halves coupled with an elastic system, (which can be relatively soft compared to the clamp itself) will not act as one stiff ring.

The clamp acts then rather as two independent halves, which may vibrate separately from each other, inducing additional vibration modes into the pipe and reducing the confinement quality. This leads to non-predictable frequency shifts. Depending on the elasticity of the clamp assembly the vibration frequency can so vary and cause measurement errors in case of spring force variations caused by thermal gradients in the structure.

There is a need to address these issues.

### SUMMARY OF THE INVENTION

Therefore, it would be advantageous to provide a concept for a reliable and robust measurement system for determining a physical property or physical parameter of a fluid in or of pipe-fluid system and to minimize measurement errors in the context of occurring temperature differences.

The object of the present invention is solved by the subject matter of the independent claims, wherein further embodiments are incorporated in the dependent claims.

In a first aspect of the present invention, there is provided a measurement system for determining a physical parameter of a pipe-fluid system, comprising:
- a clamping element that is arranged around the pipe-fluid system and that comprises a first clamping element and second clamping element, wherein the first clamping element and the second clamping element form a measurement section that corresponds to a segment of the pipe-fluid system;
- an excitation system configured to excite the pipe-fluid system and to induce a vibration of the measurement system;
- a vibration sensing element configured to measure the induced vibration,
- wherein the clamping element comprises of at least two clamping components, wherein the two clamping components are joined at least at one connection point by using a joining element.

In other words, an important aspect of the present invention in a general manner is to enable a reliable measurement of a physical property or a physical parameter of a fluid, e.g. a liquid, a gas, in a pipe-fluid system during thermally transient states, where significant temperature differences between the pipe and the clamping element respective the confinement element can occur.

The present invention provides sufficient compliance radially to the pipe to keep clamping force variations low over a relevant temperature difference range, depending on process this can be for example in the range of 10 - 40 °C or more, and still be stiff enough to prevent the clamp halves from losing alignment due to elasticity of the joining elements.

Therefore, the measurement system according to the present invention keeps the confinement quality constant, causing minimum variation of the vibration frequency as function of the clamping force variations.

Thus, the present invention enables in an advantageous manner to handle temperature variations can significantly impact the accuracy of a vibration-based clamp-on property measurement due to clamp-pipe interaction during thermal transients. The solution to achieve this effect is addressed via a mechanical design details of the clamping elements that is described in detail below, e.g. involving elastic elements and guiding elements.

According to an example, at least an elastic element is arranged between the joining element and the clamp clamping component. In this way, a reliable and robust measurement of a physical property of the fluid is enabled.

According to an example, the elastic element is configured as a cup spring element. In this way, a reliable and robust measurement of a physical property of the fluid is enabled.

According to an example, the cup spring element has a stiffness that is lower than the stiffness of the joining element and/or wherein the cup spring element has a travel path that is within a thermal operation range of the pipe-fluid system between the pipe-fluid system and the clamping component. In this way, a reliable and robust measurement of a physical property of the fluid is enabled.

According to an example, the joining element is configured as bolt. In this way, a reliable and robust measurement of a physical property of the fluid is enabled.

According to an example, the bolt is made of at least of metal. In this way, a reliable and robust measurement of a physical property of the fluid is enabled.

According to an example, the measurement system comprising at least a linear guiding element that is located at a connection point between the two clamping components and that is configured to keep the clamping components parallel to each other. In this way, a reliable and robust measurement of a physical property of the fluid is enabled.

According to an example, at least one linear guiding element is a dowel pin and/ or a dowel screw that is configured to prevent an angular deviation between the two clamping components. In this way, a reliable and robust measurement of a physical property of the fluid is enabled.

According to an example, the measurement system comprises a temperature sensing device outside the measurement section and that is configured to measure a temperature of the pipe-fluid system. In this way, a reliable and robust measurement of a physical property of the fluid is enabled.

According to an example, the temperature sensing device is installed on a surface of the pipe-fluid system outside of the measurement section or the temperature sensing device is configured to measure the temperature of the surface of the pipe-fluid system in a contactless manner. In this way, a reliable and robust measurement of a physical property of the fluid is enabled.

### BRIEF DESCRIPTION OF THE DRAWINGS

Exemplary embodiments will be described in the following with reference to the following drawings:
Fig. 1 illustrates a schematic measurement system of a pipe-fluid system according to an embodiment of the present invention;
Fig. 2a, 2b, 2c illustrate a schematic clamping element for a pipe-fluid system according to an embodiment of the present invention; and
Fig. 3a, 3b illustrate a side view of a clamping element for a pipe-fluid system according to an embodiment of the present invention.

### DETAILED DESCRIPTION OF THE DRAWINGS

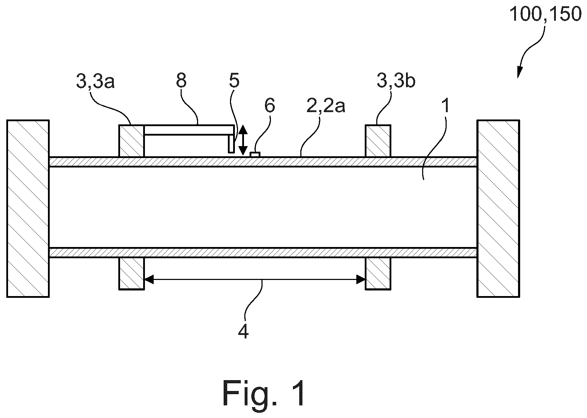

Fig. 1 illustrates a schematic measurement system 100 of a pipe-fluid system 150 according to an embodiment of the present invention.

The measurement system 100 for determining a physical parameter of a pipe-fluid system 150, comprising:
- a clamping element 3, 3a, 3b that is arranged around the pipe-fluid system 150 and that comprises a first clamping element 3a and second clamping element 3b, wherein the first clamping element 3a and the second clamping element 3b form a measurement section 4 that corresponds to a segment 2a of the pipe-fluid system 150;
- an excitation system 5 configured to excite the pipe-fluid system 150 and to induce a vibration of the measurement system 150;
- a vibration sensing element 6 configured to measure the induced vibration,
- wherein the clamping element 3, 3a, 3b comprises of at least two clamping components 3c, 3d, wherein the two clamping components 3c, 3d are joined at least at one connection point 10, 10a, 10b by using a joining element 9.

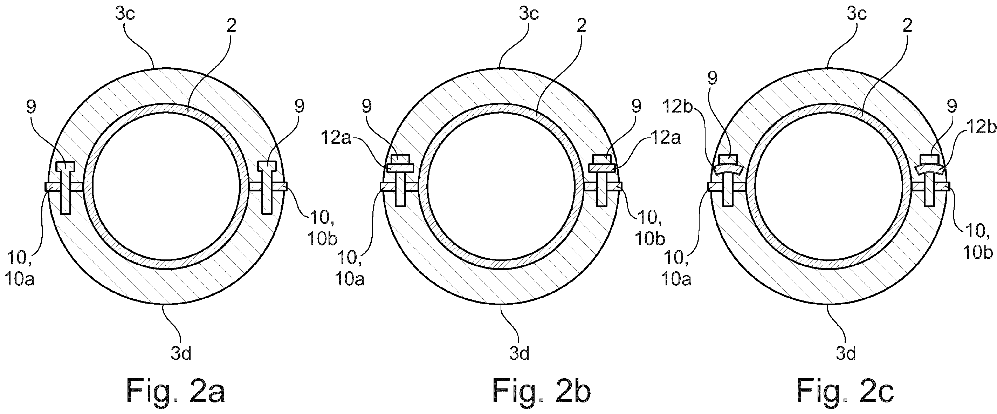

The clamping components or clamping members 3c, 3d may be two halves of a first clamping element 3a and a second clamping element 3b (see Fig. 2a to 2c). This means that the first clamping element 3a comprises of a first clamping member 3c and a second clamping member 3d. The same applies to the second clamping element 3b. However, the clamping elements 3a, 3b may be formed of a plurality of separate or individual clamping components.

The physical parameter or physical property of the fluid 1 may be for example a density, a viscosity, a pressure or a flow parameter of the fluid 1. The fluid 1 may be a liquid or a gas.

As shown in Fig. 1, the excitation system 5 may include a cantilever 8 to fasten the excitation system 5. However, other forms of means to hold the excitation system 5 are possible.

Optionally, at least an elastic element 12, 12a, 12b is arranged between the joining element 9 and the clamp clamping component 3c, 3d.

Optionally, the sensing element 6 may also be a microphone.

Further, in an optional embodiment, the sensing element 6, e.g. the vibration sensor, may also be is attached to the pipe 2 or measures vibrations without direct contact to the pipe 2, e.g. a microphone or electromagnetic or optical vibration/position sensing.

Optionally, the elastic element 12, 12a, 12b is configured as a cup spring element.

Optionally, the joining element 9 is configured as bolt.

Optionally, the bolt is made of at least of metal, but is may also be of a different metal, if preferable.

Optionally, the measurement system 100 comprising at least a linear guiding element 13 located at a connection point 10, 10a, 10b between the two clamping components 3c, 3d and that is configured to keep the clamping components 3c, 3d parallel to each other.

Optionally, the at least one linear guiding element 13 is a dowel pin and/ or a dowel screw that is configured to prevent an angular deviation between the two clamping components 3c, 3d.

Optionally, the measurement system 100 comprising a temperature sensing device outside the measurement section 4 and that is configured to measure a temperature of the pipe-fluid system 150.

Optionally, the temperature sensing device is installed on a surface of the pipe-fluid system 150 outside of the measurement section 4 or the temperature sensing device is configured to measure the temperature of the surface of the pipe-fluid system 150 in a contactless manner. One example may be an infrared measurement of the temperature.

Fig. 2a, 2b, 2c illustrate a schematic clamping element for a pipe-fluid system 150.

In Fig. 2a, a first clamping element 3a and a second clamping element 3b are arranged around the pipe 2. At a first connection point 10, 10a and at a second connection point 10, 10b, both pieces of the clamping elements or confinement elements 3a, 3b are joint by a joining element 9. The joining elements 9 at the connections points 10a, 10b may be a bolt having a defined stiffness and which may be of any suitable material to withstand occurring temperature differences, e.g. between the measurement system 100 and the pipe-fluid system 150.

In Fig. 2b, as a further embodiment of the present invention, at a first connection point 10, 10a and at a second connection point 10, 10b between the two clamping elements 3a, 3b, both pieces of the clamping elements 3a, 3b are joint or fixed around the pipe 2 by the joining element 9. However, compared to the embodiment of Fig. 2a, now an elastic element 12a is used that is placed preferably under the head of each joining element or bolt 9. However, the elastic element 12a may also be placed at a different position of the joining element 9, if appropriate.

In Fig. 2c, describing a further embodiment of the present invention, and compared to the embodiment of Fig. 2b, the elastic element 12b used at the connection points 10a, 10b is configured as a cup spring element.

Optionally, the cup spring element may have a stiffness that is lower than the stiffness of the joining element or bolt 9. In a further example, the cup spring element has a travel path that may be within a thermal operation range of the pipe-fluid system 150 between the pipe-fluid system 150 and the clamping component 3c, 3d. In a further example, the travel path of the cup spring element may be larger than a full thermal expansion difference range of the pipe-fluid system 150.

The elastic elements 12a, 12b as used in the embodiments of Fig. 2b and 2c, may therefore act as temperature compensation elements.

The clamping members or clamp halves 3c, 3d are joined, for example, by at least two stiff bolts 9 over the length of the clamp on each side (i.e. at least a total of 4 bolts). Each of these bolts may bear an elastic element 12a with high stiffness, for example, of about 5 % of the stiffness of the bolts, preferably up to 10 % (see Fig. 2b).

The cup spring elements as used in the embodiment of Fig. 2c can provide a flat characteristic, i.e. the force change is relatively small over a relatively large travel path. For example, for M8 bolts, a cup spring stack stiffness of about 30 kN/mm is recommended, and a travel of at least 0.2 mm, preferably 0.4 mm to cover the expectable thermal expansion difference between the pipe 2 and the clamping element 3.

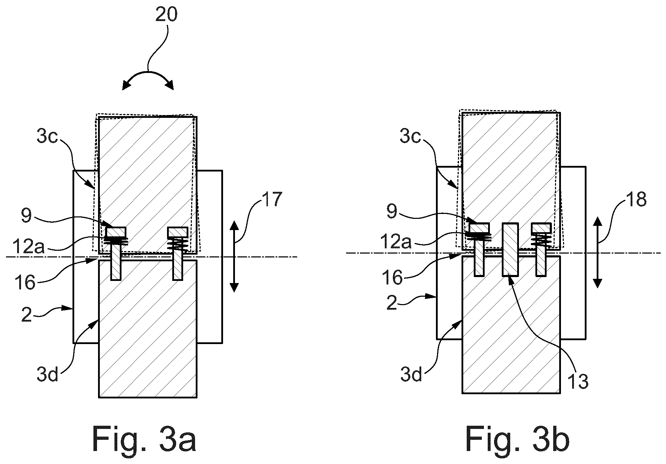

Fig. 3a, 3b illustrate a side view of a clamping element 3 for or of a pipe-fluid system 150 for according to an embodiment of the present invention.

According to the embodiment of Fig. 3a, tilting of the clamping components 3c, 3d of each clamping element 3a, 3b is possible as depicted by the tilting direction arrow 20. The arrow 17 shows the direction of the thermal expansion difference compensation.

In order to prevent a relative tilting of the clamping components 3, 3c, 3d of each clamping element 3a, 3b, when joining the clamp halves 3c, 3d, at least a linear guiding element 13 is used. This linear guiding element 13 is preferable located at a connection point 10, 10a, 10b between the two clamping components 3c, 3d of each clamping element 3a, 3b and is configured to keep the clamping components 3c, 3d parallel to each other or in a parallel position.

The guiding element 13 may be at least a tight dowel pin and/ or a dowel screw in order to prevent tilting of the clamp halves 3c, 3d against each other in vibration modes. Further, the guiding element 13 is configured to prevent an angular deviation between the two clamping components 3c, 3d.

Using such a guiding element 13 ensures a guiding of the elastic displacement, limiting it to pure radial movement and preventing tilting of clamp halves related to each other. The result is a constant confinement quality and a reduction of frequency variations as function of spring force variations during thermal transients.

### Reference signs

- 1: Fluid
- 2: Pipe
- 2a: Pipe segment
- 3: Clamping element / Confinement
- 3a: First clamping element
- 3b: Second clamping element
- 3c,3d: Clamping component
- 4: Measurement section
- 5: Excitation system
- 6: Vibration sensing element
- 8: Cantilever
- 9: Joining element
- 10, 10a, 10b: Connection point
- 12, 12a, 12b: Elastic element
- 13: Linear guiding element
- 16: Gap
- 17: Thermal expansion difference compensation
- 18: Guided thermal expansion difference compensation
- 20: Tilting direction

- 100: Measurement system
- 150: Pipe-fluid system

## Claims

1. A measurement system (100) for determining a physical parameter of a pipe-fluid system (150), comprising:
- a clamping element (3, 3a, 3b) that is arranged around the pipe-fluid system (150) and that comprises a first clamping element (3a) and second clamping element (3b), wherein the first clamping element (3a) and the second clamping element (3b) form a measurement section (4) that corresponds to a segment (2a) of the pipe-fluid system (150);
- an excitation system (5) configured to excite the pipe-fluid system (150) and to induce a vibration of the measurement system (150);
- a vibration sensing element (6) configured to measure the induced vibration,
- wherein the clamping element (3, 3a, 3b) comprises of at least two clamping components (3c, 3d), wherein the two clamping components (3c, 3d) are joined at least at one connection point (10, 10a, 10b) by using a joining element (9).

2. The measurement system (100) according to claim 1, wherein at least an elastic element (12, 12a, 12b) is arranged between the joining element (9) and the clamp clamping component (3c, 3d).

3. The measurement system (100) according to claim 2, wherein the elastic element (12, 12a, 12b) is configured as a cup spring element.

4. The measurement system (100) according to claim 3, wherein the cup spring element has a stiffness that is lower than the stiffness of the joining element (9) and/or wherein the cup spring element has a travel path that is within a thermal operation range of the pipe-fluid system (150) between the pipe-fluid system (150) and the clamping component (3c, 3d).

5. The measurement system (100) according to one of the previous claims, wherein the joining element (9) is configured as bolt.

6. The measurement system (100) according to claim 5, wherein the bolt is made of at least of metal.

7. The measurement system (100) according to one of the previous claims comprising at least a linear guiding element (13) located at a connection point (10, 10a, 10b) between the two clamping components (3c, 3d) and that is configured to keep the clamping components (3c, 3d) parallel to each other.

8. The measurement system (100) according to claim 7, wherein the at least one linear guiding element (13) is a dowel pin and/ or a dowel screw that is configured to prevent an angular deviation between the two clamping components (3c, 3d).

9. The measurement system (100) according to one of the previous claims, comprising a temperature sensing device outside the measurement section (4) and that is configured to measure a temperature of the pipe-fluid system (150).

10. The measurement system (100) according to claim 9, wherein the temperature sensing device is installed on a surface of the pipe-fluid system (150) outside of the measurement section (4) or the temperature sensing device is configured to measure the temperature of the surface of the pipe-fluid system (150) in a contactless manner.
